(19) Europäisches Patentamt
European Patent Office
Office européen des brevets

(11) **EP 2 440 949 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
*G01S 13/34* *(2006.01)*        *G01S 13/536* *(2006.01)*

(21) Anmeldenummer: **10739469.4**

(22) Anmeldetag: **02.06.2010**

(86) Internationale Anmeldenummer:
**PCT/DE2010/000609**

(87) Internationale Veröffentlichungsnummer:
**WO 2010/142267 (16.12.2010 Gazette 2010/50)**

(54) **VERFAHREN UND VORRICHTUNG ZUR MESSUNG EINER ENTFERNUNGSÄNDERUNG**

METHOD AND DEVICE FOR MEASURING A CHANGE IN DISTANCE

PROCÉDÉ ET DISPOSITIF POUR MESURER UNE VARIATION DE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **09.06.2009 DE 102009024883**

(43) Veröffentlichungstag der Anmeldung:
**18.04.2012 Patentblatt 2012/16**

(73) Patentinhaber: **Metek Meteorologische Messtechnik GmbH**
**25337 Elmshorn (DE)**

(72) Erfinder: **PETERS, Gerhard**
**22547 Hamburg (DE)**

(74) Vertreter: **Heinemeyer, Bianca Maria**
**Patentanwaltskanzlei Heinemeyer**
**Balanstrasse 57**
**81541 München (DE)**

(56) Entgegenhaltungen:
**EP-A1- 1 314 998     GB-A- 1 108 115**
**US-A- 5 869 747     US-A1- 2008 291 078**

EP 2 440 949 B1

## Beschreibung

### Technisches Gebiet:

Die Erfindung betrifft eine Vorrichtung sowie ein Verfahren zur Messung einer Entfernungsänderung zwischen einem FMCW-Doppler-Radar und einem Objekt, wobei zunächst aus einem Sende- und einem Echosignal ein Mischsignal gebildet und anschließend durch die Bestimmung der Ableitung der Phase des Mischsignals die Entfernung zwischen dem Doppler-Radar und dem zu vermessenden Objekt bestimmt wird.

### Stand der Technik:

Für die Entfernungsmessung bzw. die Messung einer Entfernungsänderung kommen, genauso wie in anderen Anwendungsgebieten für Radargeräte, zwei sich In ihrer Funktionsweise unterscheidende Radartechnologien in Frage. Im Wesentlichen werden hierbei Impuls- und CW- bzw. Dauerstrich-Radargeräte unterschieden. Ein Puls-Radargerät sendet Impulse mit einer typischen Dauer im unteren Mikrosekundenbereich und empfängt schließlich das reflektierte Echo. Die Laufzeit des Impulses wird in diesem Fall zur Entfernungsbestimmung genutzt.

Im Gegensatz zu Pulsradargeräten senden CW-Radargeräte (Continuos Wave Radar) kontinuierliche Sendesignale aus. Derartige CW-Radargeräte werden oftmals für die Geschwindigkeitsmessung bewegter Objekte, beispielsweise im Straßenverkehr, eingesetzt, wobei in diesem Anwendungsfall der Dopplereffekt, also eine Frequenzverschiebung des Echo- gegenüber dem Sendesignal, ausgewertet wird. Entfernungsmessung ist mit derartigen Radargeräten, die kontinuierliche Sendesignale aussenden allerdings nur mit vergleichsweise großem Aufwand und in einem oftmals nicht zufrieden stellenden Eindeutigkeitsbereich möglich..

Neben den mit konstanter Sende- bzw. Echofrequenz arbeitenden CW-Radargeräten sind frequenzmodulierende Dauerstrich-Radargeräte (FM CW) bekannt. Bel diesem Radargerätetyp wird die Frequenz des Sendesignals moduliert, wobei vornehmlich die Frequenz innerhalb eines Zeitintervalls variiert, also verringert oder erhöht wird, so dass als Sende- und Echosignal ein sogenannter Sweep genutzt wird. Im Gegensatz zu den eingangs erwähnten Pulsradaren benötigen CW- und FMCW-Radare keine hohe Sendeleistung, um ein gutes Signal-Rausch-Verhältnis zu erzielen. Da diese Radargeräte allerdings kontinuierliche Sendesignale erzeugen und senden, lässt sich die Zeit, die das Signal für den Weg vom Radar zum Objekt und zurück benötigt, für die Entfernungsmessung nicht direkt verwenden. Vielmehr wird die Entfernung aus der Frequenzdifferenz zwischen den Sende- und Echosignalen bestimmt. Diese Frequenzdifferenz resultiert letztendlich daraus, dass aufgrund der zeitlichen Verzögerung des Echosignals durch den Laufzeitunterschied die augenblickliche Frequenz des Echosignals stets höher oder niedriger als die des Sendesignals ist.

Die Erfindung findet Anwendung bei FMCW-Radargeräten, also Geräten, die frequenzmodulierte Sendesignale mit konstanter Leistung senden. Wesentliches Bauteil des FMCW- bzw. Dauerstrich-Radargeräts ist ein freilaufender, spannungsgesteuerter Oszillator mit integriertem Mischer. Das erzeugte Signal wird in Form frequenzmodulierter, oftmals linear polarisierter elektromagnetischer Wellen durch einen Wellenleiter zur Antenne geleitet. Schließlich wird das von einem zu vermessenden Objekt reflektierte Echosignal durch eine Empfangseinrichtung, die häufig in der selben Antenne wie die Sendeeinrichtung integriert ist, empfangen und der integrierten Mischdiode zugeführt. Da diese Mischdiode außerdem mit einem Anteil des Sendesignals gespeist wird, fungiert sie als Mischer der beiden Signale. Aus der zeitlichen Veränderung der Phase des auf diese Weise erzeugten Mischsignals wird die Entfernung zwischen Radargerät und Messobjekt ermittelt.

Gemeinsam ist allen derartigen Radar-Messverfahren, die grundlegende Notwendigkeit, zumindest abschnittsweise lineare Frequenzveränderungen Innerhalb des Modulationsintervalls zu gewährleisten. Hierzu schlägt beispielsweise die EP 0 499 952 A1 ein Radarsystem vor, dass Mittel und Verfahren zur Überprüfung und Korrektur der Linearität der Modulation vorsieht.

Darüber hinaus ist aus der US 4,106,020 ein Radarsystem zur Bestimmung der Materialhöhe in einem Hochofen bekannt. In diesem Fall wird ein FMCW-Radarsystem zur Bestimmung von Entfernungen eingesetzt, bei dem unerwünschte Schwankungen des Frequenzhubes, also des Unterschieds der Frequenz innerhalb eines Modulationsintervalls, und / oder der Rampendauer der Modulation durch eine Skalierungsvorrichtung kompensiert werden. Dabei wird die jeweilige, ein Radarziel repräsentierende Differenzfrequenz mittels einer Zählvorrichtung bestimmt, wobei die Zähldauer in Abhängigkeit des Frequenzhubes und der Rampendauer variiert wird. Die beschriebene technische Lösung lässt sich bevorzugt für ein bekanntes zu vermessendes Objekt einsetzen, ist darüber hinaus aber weder flexibel noch für unterschiedliche zu vermessende Objekte einzusetzen.

Die US 2008/291078 A1 beschreibt ein Radarsystem für Kraftfahrzeuge zur Messung von Abständen und Relativgeschwindigkeiten zweier bewegter Fahrzeuge. Das beschriebene Radarsystem wird als adaptiver Geschwindigkeitsregler eingesetzt, der die Geschwindigkeit des eigenen Fahrzeugs automatisch an die Geschwindigkeit eines vorausfahrenden Fahrzeugs anpassen, um so einen Sicherheitsabstand zwischen den jeweiligen Fahrzeugen einstellen und so einen Aufprall vermeiden zu können.

Weiterhin geht aus der GB 1 108 115 A ein Radargerät zur Messung des Bodenabstandes eines Flugzeugs oder Hubschraubers hervor. Auch in diesem Fall befindet sich der Radarsensor, von dem das Sendesignal ausgesendet wird, in einem bewegten Objekt.

Aus der DE 196 32 889 A1 ist weiterhin ein Radarsystem mit einem frequenzmodulierten Sendesignal bekannt, bei dem Messfehler, die sich aus einer Veränderung des jeweiligen Frequenzhubes innerhalb eines Modulationsintervalls, der auch als Bandbreite der Frequenz bezeichnet wird, ergeben, weitgehend vermieden werden sollen. Mit der beschriebenen technischen Lösung soll dies insbesondere dadurch erreicht werden, dass Mittel vorgesehen sind, die den jeweiligen tatsächlichen Ist-Frequenzhub der Modulation als quantifizierbaren Zahlenwert bestimmen. Eine spezielle Weiterbildung des beschriebenen Verfahrens sieht hierbei vor, dass der ermittelte, tatsächliche Ist-Frequenzhub zur Berechnung der Entfernung zu dem zu vermessenden Objekts verwendet wird.

Bei der herkömmlichen Entfernungsmessung mit Hilfe eines FMCW-Radars wird die Frequenz eines durch Mischen des Sende- und Empfangssignals erzeugten Mischsignals ausgewertet. Durch die Auswertung der Mischfrequenz sind insbesondere der Entfernungsauflösung und damit der messbaren Entfernungsänderung praktische Grenzen gesetzt. Dies ist unter anderem darauf zurück zuführen, dass die Frequenz des Mischsignals nicht hinreichend stabil ist, insbesondere im Laufe der Betriebszeit eines Radargeräts eine gewisse Drift aufweist, die vornehmlich durch die Alterung der elektronischen Bauteile sowie Temperaturveränderungen hervorgerufen wird.

Der Einsatz von FMCW-Radargeräten für die Messung von Entfernungsänderungen ist bislang vor allem ausgeschlossen, da der relative Fehler der Sendefrequenz einen ebenso großen relativen Fehler der Entfernungsmessung bewirkt. Störend wirkt sich hierbei insbesondere die Drift der Radarfrequenz auf Zeitskalen aus, auf denen auch die Entfernungsänderungen der Radarziele erwartet werden. Hierbei ist zu berücksichtigen, dass die Stabilitätsanforderungen um so größer sind, je langsamer die zu vermessenden Entfernungsänderungen sind. Die Stabilität herkömmlicher Radarsender, die bspw. mit einem freilaufenden, spannungsgesteuerten Gunn-Oszillator ausgerüstet sind, liegt in einem Temperaturbereich von -30° bis 60°C bei $+/-10^{-3}$. Für Anwendungsfälle, die höhere Genauigkeiten erfordern, sind allerdings Stabilitäten der Sendesignalfrequenz von wenigstens $+/-10^{-6}$ erforderlich. Derartige Stabilitäten können mit temperaturkompensierten Quarzoszillatoren erreicht werden, die allerdings nicht frequenzmodulierbar und somit nicht für eine Entfernungsmessung mit einem FMCW-Radar auf herkömmlichem Weg einsetzbar sind.

Keines der aus dem Stand der Technik beschriebenen FMCW-Radarmesssysteme stellt somit sicher, dass auch vergleichsweise geringe Änderungen eine Entfernung trotz einer durch die Alterung der Bauteile und Temperaturschwankungen hervorgerufenen Veränderung der Sendesignalfrequenz, mit hoher Messgenauigkeit und ohne verhältnismäßig großen technischen Aufwand bestimmbar sind.

Ausgehend von dem zuvor geschilderten Problem liegt der Erfindung die Aufgabe zugrunde, eine FMCW-Radareinheit sowie ein mit dieser Einheit ausführbares Messverfahren anzugeben, mit dem mit verhältnismäßig einfachen Mitteln, insbesondere auch kostengünstig, hochpräzise Entfernungsänderungen bestimmbar sind. Vor allem soll eine hohe Genauigkeit bei der Messung einer Entfernungsänderung erreicht werden, die im Vergleich zu der Entfernung zwischen der Radareinheit und dem zu vermessenden Objekt sehr klein ist. Bevorzugt sollen derartige Geräte auch in schlecht zugänglichen Gebieten einsetzbar sein. In diesem Zusammenhang soll es möglich sein, das anzugebende Messverfahren mit einem FMCW-Radarsystem zu verwirklichen, das sich durch einen vergleichsweise geringen Energiebedarf auszeichnet und daher beispielsweise mit einer autonomen Stromerzeugung ausgestattet werden kann.

Die vorgenannte Aufgabe wird mit einem Verfahren nach Anspruch 1 sowie einem Radarmessgerät gemäß Anspruch 11 gelöst. Vorteilhafte Ausführungsformen der Erfindung sind Gegenstand der abhängigen Ansprüche und werden in der nachfolgenden Beschreibung, teilweise unter Bezugnahme auf die Figuren, näher erläutert.

Das erfindungsgemäße Verfahren zur Messung einer Entfernungsänderung zwischen einem feststehenden Ausgangspunkt, an dem sich eine Sende- und eine Empfangseinheit befinden, und einem Objekt mit einem FMCW-Radar, das frequenzmodulierte, kontinuierliche elektromagnetische Mikrowellen als Sendesignal aussendet sowie als Echosignal empfängt und auswertet, weist die folgenden Schritte auf:

- Senden eines Sendesignals vom Ausgangspunkt derart in Richtung des Objekts, dass das Sendesignal vom Objekt reflektiert wird,
- Empfangen eines Echosignals am Ausgangspunkt, das durch die Reflexion des Sendesignals am Objekt erzeugt wird,
- Mischen des Sendesignals mit dem Echosignal in einem Mischer zur Erzeugung eines Mischsignals,
- Auswertung des Mischsignals, indem

  ◦ eine Frequenzanalyse In Form einer Spektralanalyse des Mischsignals zur Identifizierung von zu vermessenden Objekten durchgeführt wird
  ◦ die Phasen der den interessierenden Objekten zugeordneten Spektralfrequenzen bestimmt werden
  ◦ die zeitlichen Änderungen der Phasen zur Bestimmung der Entfernungsänderungen der interessierenden Objekte ermittelt werden

Um zusätzlich zur Entfernungsbestimmung, die mittels der zuvor aufgelisteten Verfahrensschritte realisiert wird, hochgenau eine Änderung der Entfernung und/oder eine Größe der Entfernungsänderung zu stationären Objekten zu bestimmen, zeichnet sich das erfindungsgemäße Verfahren dadurch aus,
dass ein für stationäre Ziele zeitunabhängiger Teil der Phase des Mischsignals unter Berücksichtigung einer Laufzeit des Sende- und/oder des Echosignals zwischen Ausgangspunkt und Objekt ausgewertet wird und unter Zugrundelegung einer Änderung des für stationäre Ziele zeitunabhängigen Teils der Phase die Änderung der Entfernung zwischen dem Ausgangspunkt und dem Objekt bestimmt wird.

Der wesentliche erfinderische Gedanke beruht somit darauf, die Phase des in einer FMCW-Radareinheit aus Sende- und Echosignal gebildeten Mischsignals, die typischerweise aus zeitabhängigen und zeitunabhängigen Anteilen gebildet wird, nicht nur im Hinblick auf den zeitabhängigen Teil, sondern auch auf den zeitunabhängigen Anteil auszuwerten. Auf diese Weise ist es möglich, auch mit einem FMCW-Radargerät nicht nur Entfernungen, sondern auch geringe Entfernungsänderungen zwischen dem Radargerät und einem weitgehend stationären Messobjekt zu erfassen.

Der zeitunabhängige Teil der Phase des Mischsignals setzt sich aus zwei Anteilen zusammen, von denen der erste von der Laufzeit und der Mittenfrequenz des Sende- und/oder Echosignals abhängt, während der zweite Anteil von dem Quadrat der Laufzeit, dem Frequenzhub des Sende- und/oder Echosignals sowie der Dauer des Signalsweeps bestimmt wird. Da der zweite Anteil des zeitunabhängigen Teils der Phase des Mischsignals unter praktischen Bedingungen sehr klein ist, wird dieser Anteil bei der Auswertung vorzugsweise nicht berücksichtigt.

Der erste Anteil des zeitunabhängigen Teils der Phase des Mischsignals ist stark von der Laufzeit des Sende- und/oder Echosignals zwischen dem Ausgangspunkt, also der Sendeantenne des Radars, und dem zu messenden stationären Objekt abhängig. Da für den ersten Anteil des zeitunabhängigen Teils der Phase des Mischsignals Folgendes gilt:

$$\varphi_{m0}(t_d) = -\omega_0 \cdot t_d$$

wobei
$\omega_0$ die Mittenfrequenz des Radars und
$t_d$ die Laufzeit des Sende und des Echosignals repräsentiert
und das Mischsignal durch

$$m(t) = m_0 \cdot \cos(\varphi_m(t))$$

beschrieben wird, ergibt sich aus den beiden vorigen Formeln, dass eine Änderung der Entfernung des zu vermessenden Objekts und damit eine Veränderung der Laufzeit des Sende- und/oder Echosignals von einer halben Wellenlänge eine Phasenverschiebung um 360° bewirkt. Auf diese Weise ist es mit dem erfindungsgemäßen Verfahren möglich, bereits Entfernungsänderungen des zu messenden Zielobjekts von einem kleinen Bruchteil der Wellenlänge des Mischsignals mit hoher Genauigkeit und vergleichsweise geringem gerätetechnischem Aufwand zu messen. Ungenauigkeiten des Frequenzhubs und/oder der Dauer des Signalsweeps haben auf die zuvor beschriebene Auswertung keinen Einfluss.

In einer besonders geeigneten Weiterbildung des erfindungsgemäßen Verfahrens wird zusätzlich eine für das FMCW-Radar gerätespezifische, der Frequenzmodulation übertagerte Frequenzdrift des Sende- und / oder Echosignals sowie ein hieraus resultierender, rechnerischer Laufzeitfehler ermittelt und der durch die Frequenzdrift verursachte rechnerische Laufzeitfehler bei der Auswertung des zeitunabhängigen Teils der Phase des Mischsignals berücksichtigt wird.

Die zuvor beschriebene Maßnahme stellt somit eine geeignete Korrektur dar, um Messfehler, die aufgrund einer alterungs- und/oder temperaturänderungsbedingter Änderung der Frequenz, insbesondere der Mittenfrequenz, des Sende- und/oder Echosignals auftreten, auszuschließen. Sobald durch die Auswerteeinheit ermittelt worden ist, wie groß die Abweichung der momentanen Sende- und/oder Echosignalfrequenz von der ursprünglichen Frequenz ist, kann diese Information bei der Auswertung der Gesamtphasenverschiebung berücksichtigt werden, so dass für die Ermittlung einer Entfernungsänderung zwischen Sendeantenne und stationärem Objekt ausschließlich eine Verschiebung der Phase des Mischsignals, die durch eine veränderte Laufzeit des Sende- und Echosignals hervorgerufen wird, berücksichtigt wird.

Diese Weiterbildung der Erfindung beruht somit darauf, dass die Drift der Frequenz des Sendesignals, vorzugsweise die Drift der Mittenfrequenz des Sendesignals, ermittelt und diese Frequenzdrift bei der Auswertung einer Phasenverschiebung des Mischsignals und somit bei der Ermittlung einer Entfernungsänderung zwischen Radar und Messobjekt berücksichtigt wird. Durch die Berücksichtigung der Frequenzdrift des Sende- und/oder Echosignals bei der Auswertung einer Phasenänderung des Mischsignals ist es möglich, im Vergleich zur gemessenen Entfernung sehr kleine Entfernungsänderungen zu detektieren bzw. hochgenaue Entfernungsmessungen durchzuführen. Mit dem beschriebenen Verfahren ist es insbesondere auf bevorzugte Weise möglich, Entfernungsänderungen von bis zu 0,1 mm/h bei einer Ausgangsentfernung von etwa 1000 m zu erfassen.

In einer weiteren vorteilhaften Ausführungsform wird zusätzlich zur Entfernungs- und Entfernungsänderungsmessung wenigstens ein weiterer Parameter der Umgebungsluft gemessen, um diesen Parameter bei der Auswertung in Bezug auf eine von den Umgebungsluftparametern abhängige Lichtgeschwindigkeit zu berücksichtigen. Die Lichtgeschwindigkeit und damit die Geschwindigkeit, mit der sich ein Sende- und/oder ein Echosignal ausbreitet sind nicht konstant, sondern unter anderem von der Luftfeuchte und der Lufttemperatur abhängig. Vorzugsweise wird daher bei einer erfindungsgemäß ausgeführten Messung die Luftfeuchte sowie die Lufttemperatur erfasst und die erfassten Werte bei der Auswertung des zeitunabhängigen Teils der Phase des Mischsignals, vornehmlich bei der Ermittlung der Entfernung aus der Laufzeit und der Licht- bzw. Signalausbreitungsgeschwindigkeit, berücksichtigt. Bei dieser Ausführungsform der Erfindungen ist es sogar möglich, Entfernungsänderungen von 0,01 mm/h bei einer Ausgangsentfernung von etwa 1000 m sicher zu detektieren.

Zur Bestimmung der Frequenzdrift werden bevorzugt mit Hilfe einer geeigneten Messung zunächst die aktuelle Mittenfrequenz des Sendesignals, die auch als Ist-Mittenfrequenz bezeichnet werden kann, bestimmt. Unter Zugrundelegung dieser Ist-Mittenfrequenz sowie der nominellen Mittenfrequenz des Sendesignals, also der theoretischen mittleren Sendesignalfrequenz eines Modulationsintervalls, wird die Frequenzdrift bestimmt. Die Frequenzdrift stellt eine im Laufe der Betriebszeit eines Radars auftretende, gerätespezifische Veränderung der Frequenz des Sendesignals dar, die hauptsächlich durch eine Alterung der elektronischen Bauteile und/oder Temperaturveränderungen bedingt ist. In einer vorteilhaften Weiterbildung der Erfindung wird diese gerätespezifische Frequenzdrift bei der Bestimmung der Entfernungsänderung einer Messstrecke zwischen Radar und Messobjekt direkt bei der Bestimmung der Phasenänderung eines aus Sende- und Echosignal gebildeten Mischsignals berücksichtigt. Diese Weiterbildung beruht somit darauf, die aktuelle, driftende Sendefrequenz des FMCW-Radars zu messen und diese variable Frequenz bei der Ableitung der Entfernung aus der Phase des Mischsignals zu berücksichtigen. Im Vergleich, beispielsweise zum Hardware-Aufwand einer Frequenzstabilisierung, ist der Zusatzaufwand für die Realisierung der erfin-dungsgemäßen Lösung für Hard- und Software vergleichsweise gering. Das beschriebene Verfahren kann insbesondere mit kostengünstigen FMCW-Radarsystemen ausgeführt werden, die darüber hinaus auch durch einen geringen Energiebedarf auszeichnen.

Gegenüber dem Sendesignal ist das Empfangssignal aufgrund der Entfernung zwischen Radargerät und Messobjekt um die Laufzeit des Signals verzögert. Ein ausgekoppelter Teil des Sendesignals sowie das vom Messobjekt reflektierte Echosignal werden in einer Mischdiode gemischt. Da der hochfrequente Anteil des Mischsignals für die weitere Auswertung uninteressant ist, wird dieser Anteil des Mischsignals in einer speziellen Ausführungsform der Erfindung in einem dem Mischer nachgeschalteten Tiefpassfilter herausgefiltert.

Weiterhin wird in der Auswerteeinheit des Radarsystems die Frequenz des Mischsignals aus der zeitlichen Änderung der Phase des Mischsignals, also der Ableitung des Mischsignals nach der Zeit, bestimmt. Die Frequenz des Mischsignals, die gleichzeitig die Frequenzdifferenz zwischen Sende- und Echosignal darstellt, lässt sich mittels folgender Gleichung darstellen:

$$\frac{\omega_m}{2\pi} = f_m = \frac{B}{T} t_D$$

Die Zeitverzögerung zwischen Sende- und Echosignal ist von der Lichtgeschwindigkeit und der Entfernung zwischen dem Messobjekt und der am Ausgangspunkt befindlichen Sendeantenne abhängig. Diese Entfernung stellt hierbei eine Ausgangsgröße dar, die bei stationären, also weitgehend ruhenden Messobjekten konstant ist. Die Frequenzdifferenz zwischen Sende- und Echosignal ist direkt proportional zu der gemessenen Entfernung, was durch folgende physikalische Beziehung anschaulich gemacht wird:

$$D = \frac{c \cdot t_D}{2} = \frac{c \cdot T}{2 \cdot B} \cdot f_m$$

wobei gilt:

D:     Entfernung zwischen Radargerät und Messobjekt,

$t_D$:     Zeitverzögerung zwischen Sende- und Echosignal,

c:     Lichtgeschwindigkeit,

B:  Bandbreite des modulierten Sendesignals und

$$f_m = \frac{B}{T} \cdot t_D :$$  Frequenzdifferenz = Frequenz des Mischsignals

In einer ganz speziellen Ausführungsform der Erfindung wird zur Ermittlung der gerätespezifischen Frequenzdrift eine Zwischenfrequenz durch Mischen einer Referenzsignalfrequenz mit einer nominellen Mittenfrequenz des Sende- und / oder Echosignals des Radars und anschließender Tiefpassfilterung gebildet. Bevorzugt ist die Referenzsignalfrequenz gegenüber der nominellen Mittenfrequenz des Sendesignals um 90 bis 110 MHz, in einer ganz speziellen Ausführungsform um 100 MHz, verschoben. Der Zusammenhang zwischen Zwischensignalfrequenz, nomineller Mittenfrequenz und Referensignalfrequenz lässt sich wie folgt ausdrücken:

$$f_z = f_0 - f_r$$

wobei gilt

$f_z$:  Zwischensignalfrequenz,
$f_0$ :  nominelle Mittenfrequenz des Sendesignals und
$f_r$:  Referenzsignalfrequenz.

Eine weitere spezielle Weiterbildung der Erfindung sieht vor, dass mittels einer Zähleinheit die innerhalb eines Messintervalls befindlichen Perioden der Zwischenfrequenz ermittelt werden, um unter Zugrundelegung einer Größe des Messintervalls und einer Anzahl der Perioden die benötigte Zwischenfrequenz zu bestimmen. Hier-bei stellt die Zähleinheit nach einer erfolgten Messung die Zahl der ermittelten Perioden für den Signal-Prozessor des Radars zur Verfügung. Die Zwischenfrequenz ist mittels der folgenden Formel bestimmbar:

$$f_z = \frac{N_z}{T_{Mess}}$$

wobei gilt:

$f_z$ :  Frequenz des Zwischensignals (Zwischensignalfrequenz)
$N_z$:  Perioden des Zwischensignals innerhalb eines Messintervalls
$T_{Mess}$ :  Messintervall

Die gerätespezifische Frequenzdrift kann daraufhin als Differenz der nominellen Mittenfrequenz und der aktuellen Mittenfrequenz, also der Ist-Mittenfrequenz, bestimmt werden. Somit sieht diese spezielle Weiterbildung der Erfindung vor, dass unter Zugrundelegung der Zwischenfrequenz und der Referenzsignalfrequenz eine Ist-Mittenfrequenz des Sende- und / oder Echosignals bestimmt wird und anhand eines Vergleichs der nominellen Mittenfrequenz und der Ist-Mittenfrequenz die gerätespezifische Frequenzdrift bestimmt wird. Die Frequenzdrift $\Delta f_0$ wird wie folgt ermittelt:

$$\Delta f_0 = f_0^n - f_0 = f_0^n - (f_z + f_r)$$

Auf diese Weise stehen in der Auswerteeinheit für aufeinanderfolgende Zeitpunkte einerseits Daten für die jeweilige Frequenzdifferenz zwischen Sende- und Echosignal aufgrund der Bestimmung der zeitlichen Änderung der Phase des Mischsignals, also einer Ableitung der Phase des Mischsignals nach der Zeit, und andererseits für die jeweilige Drift des Sende- und / oder Echosignals zur Verfügungen. Verändern sich die Werte für die zeitliche Änderung der Phase des Mischsignals, so lässt sich hier-aus grundsätzlich eine Entfernungsänderung zwischen Radargerät und Messobjekt bestimmen, wobei diese Werte mit den eingangs beschriebenen Fehlern behaftet sind. Aus diesem Grund wird erfindungsgemäß die, wie zuvor erläutert, erfasste variable Frequenzdrift des Sende- und/ oder des Echosignals direkt bei der Bestimmung einer Entfernungsänderung, also bei der Ermittlung einer Veränderung der Ableitung der Phase des Mischsignals, berücksichtigt wird.

Besonders bevorzugt wird die Zähleinheit am Anfang eines Modulationsintervalls gestartet und am Ende einer vorgegebenen Anzahl darauf folgender Modulationsintervalle gestoppt. Hierbei werden in der Auswerteeinheit die mit der Zähleinheit realisierten Zählintervalle in Bezug auf die Phase der Modulationsintervalle synchronisiert, so dass eine feste Phasenbeziehung zwischen den Zählintervallen und den Modulationsintervallen besteht. Eine vorteilhafte Weiterbildung sieht in diesem Zusammenhang vor, dass das Zählintervall eine ganze Zahl von Modulationsintervallen umfasst, auch wenn dies, ebenso wie der Start der Zähleinheit zu Beginn eines Modulationsintervalls zwingend notwendig ist. Eine spezielle Ausführungsform der Erfindung sieht in diesem Zusammenhang vor, dass während die Zähleinheit aktiviert ist das Sendesignal der Radareinheit ausgeschaltet und so die Radarmessung unterbrochen wird.

Eine weitere spezielle Ausgestaltung der Erfindung sieht in diesem Zusammenhang vor, dass das Zwischenfrequenzsignal über eine Frequenzweiche auf einen Verstärker und schließlich auf die Zähleinheit geleitet wird.

Neben dem zuvor beschriebenen Verfahren betrifft die Erfindung des Weiteren ein FMCW-Radarsystem, das in bekannter Weise über eine Sende- sowie Empfangsantenne und einen Mischer sowie eine Auswerteeinheit verfügt. In der Auswerteeinheit wird aus der zeitlichen Phasenänderung eines aus Sende- und Echosignal gebildeten Mischsignals die Entfernung zwischen der Radarantenne und dem Messobjekt bestimmt. Eine erfindungsgemäß ausgeführte FMCW-Radareinheit zeichnet sich darüber hinaus dadurch aus, dass eine Auswerteeinheit vorgesehen ist, durch die ein zeitunabhängiger Teil der Phase des Mischsignals unter Berücksichtigung einer Laufzeit des Sende- und/oder Echosignals zwischen Sendeantenne und Messobjekt derart auswertbar ist, dass aus einer Änderung der Laufzeit eine Änderung der Entfernung zwischen Sendeantenne und Messobjekt erfassbar ist.

Eine erfindungsgemäß ausgeführte Auswerteeinheit eines FMCW-Radargeräts zeichnet sich somit insbesondere dadurch aus, dass die Phase des Mischsignals in ihren zeitabhängigen und zeitunabhängigen Anteil aufteilbar ist und der zeitunabhängige Anteil unter Berücksichtigung einer Laufzeitänderung des Sende- und/oder Echosignals auswertbar ist.

In einer bevorzugten Ausführungsform der Erfindung ist vorgesehen, dass ein Oszillator zur Erzeugung eines Referenzsignals zumindest weitgehend konstanter Frequenz vorgesehen ist, das über eine Hilfsantenne in die Empfangseinheit einspeisbar ist, wobei der Empfangseinheit eine Frequenzweiche nachgeschaltet ist, über die ein durch Mischen von Sende- und Referenzsignal gebildetes, eine Zwischenfrequenz aufweisendes Zwischenfrequenzsignal auf eine Zähleinheit zur Ermittlung der Perioden innerhalb eines Messintervalls geleitet wird, wobei die Zähleinheit derart mit einem Digitalsignal-Prozessor verbunden ist, das auf der Grundlage der ermittelten Perioden die Größe der Zwischenfrequenz ermittelt wird und anhand eines Vergleichs einer Ist-Mittefrequenz mit einer nominellen Mittenfrequenz eine gerätespezifische Frequenzdrift des FMCW-Radars und die ermittelte Frequenzdrift bei der Bestimmung einer Entfernungsänderung zwischen dem Ausgangspunkt und dem Objekt einbezogen wird.

Eine spezielle Weiterbildung der erfindungsgemäßen Radareinheit sieht vor, dass die Sende- und Empfangseinheit in eine gemeinsame Radarantenne integriert sind.

Bei dem Oszillator handelt es sich bevorzugt um einen quarz-stabilen, temperaturkompensierten Oszillator, der ein Referenzsignal mit einer gegenüber der nominellen Radarmittenfrequenz verschobenen Frequenz erzeugt.

Eine bevorzugte Verwendung des beschriebenen erfindungsgemäß ausgeführten FMCW-Radargeräts zur Bestimmung einer Entfernungsänderung und insbesondere seine spezielle Ausführungsform, die eine ergänzend ermittelte Frequenzdrift des Gerätes berücksichtigt, betrifft die Beobachtung von Gesteinsbewegungen, vorzugsweise von Fels- oder Gesteinsformationen im Gebirge. Mit einem derart präzise arbeitenden Gerät ist es auf bevorzugte Weise möglich, bevorstehende Abgänge von Gesteinsformationen oder Muren zu detektieren, um rechtzeitig entsprechende Warn- oder Sicherungsmaßnahmen, wie beispielsweise die Sperrung einer Straße, einleiten zu können.

Mit einem entsprechenden FMCW-Radargerät ist es möglich, eine hochpräzise, vergleichsweise kostengünstige Entfernungsänderungsmessung durchzuführen, indem das Gerät in einer Entfernung von vorzugsweise 10 m bis 5 km von der zu vermessenden Gesteinskonstellation, insbesondere einem Hang, der abzugehen droht, aufzustellen, um bereits kleinste Gesteinsbewegungen zu detektieren. Derartige Geräte können vorzugsweise auch in unwegsamem Gelände aufgestellt werden, da sie sich durch eine sehr geringe Energieaufnahme auszeichnen und somit problemlos eine autarke Stromversorgung zusammen mit dem Gerät aufgestellt werden kann.

Im Folgenden wird die Erfindung ohne Beschränkung des allgemeinen Erfindungsgedankens unter Bezugnahme auf die Figuren näher erläutert. Es zeigen:

Fig. 1:     allgemeiner Aufbau eines FMCW-Radars.

Fig. 2a:    frequenzmoduliertes Sendesignal und von einem feststehenden Objekt reflektiertes Echosignal;

Figur 2b:   durch die Mischung von Sende- und Echosignal im Mischer gebildetes Mischsignal;

Figur 3:    FMCW-Radar mit integrierter Bestimmung der Frequenzdrift des Sendesignals.

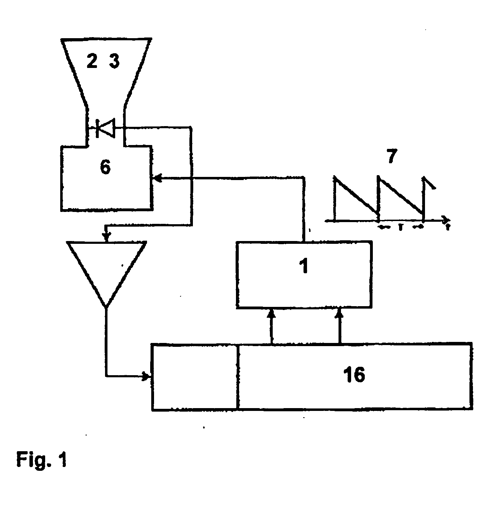

Figur 1 zeigt den prinzipiellen Aufbau herkömmlicher FMCW-Radarsysteme. In derartigen Geräten wird üblicherweise mittels eines freilaufenden spannungsgesteuerten Gunn-Oszillators 1 ein Signal erzeugt, das an eine Sendeeinheit 2 übertragen wird, durch die über eine Parabolantenne frequenzmoduliert linear polarisierte elektromagnetische Wellen ausgesendet werden. Die Parabolantenne wird derart ausgerichtet, dass das Sendesignal 4 auf ein Messobjekt trifft, dass das Sendesignal 4 reflektiert und ein Echosignal 5 von einer Empfangseinheit 3, die üblicherweise mit der Sendeeinheit in einer Antenne integriert ist, empfangen wird. Das reflektierte Echosignal 5 wird in einer Mischdiode 6 mit einem Anteil des Sendesignals gemischt. Die Ermittlung der Entfernung zwischen Radargerät und Messobjekt erfolgt in einer Auswerteeinheit durch Bestimmung der Frequenzdifferenz zwischen Sende- und Echosignals, indem die zeitliche Änderung der Phase des Mischsignals bestimmt wird. Ein großer Vorteil von FMCW-Radargeräten besteht darin, dass die im Gegensatz zu Pulsradargeräten eine geringere Sendeleistung benötigen, um ein gutes Signal-Rausch-Verhältnis zu erzielen.

Im Folgenden wird der mathematische Hintergrund zur Messung der Phasenänderung mit herkömmlichen. FMCW-Radargeräten erläutert.

Während eines Frequenzsweeps $-\dfrac{T}{2} \leq t \leq \dfrac{\dot{T}}{2}$ gilt für dasSendesignal

$$s(t) = s_0 \sin\!\big(\varphi_s(t)\big) \qquad (1)$$

das Empfangssignal

$$e(t) = e_0 \sin\!\big(\varphi_s(t - t_d)\big) \qquad (2)$$

die Sendephase

$$\frac{\varphi_s(t)}{2\pi} = f_0 t - \frac{1}{2}\frac{B}{T}t^2 + \left(\varphi_0 - \frac{1}{8}BT\right) \qquad (3)$$

und die Laufzeit

$$t_d = 2x/c \qquad (4).$$

Dabei ist

x die Zielentfernung
c die Lichtgeschwindigkeit
B der Frequenzhub ($\sim$ Bandbreite)
$f_0$ die Mittenfrequenz des Radars
T die Dauer des Frequenzsweeps
$\varphi_s$ die Phase des Sendesignals
$\varphi_0$ die Phase der Mittenfrequenz des Sendesignals im Zeitpunkt $t = 0$
$s_0$ die Amplitude des Sendesignals
$e_0$ die Amplitude des Empfangssignals

Für die niederfrequente Komponente des Mischsignals gilt:

$$m(t) = m_0 \cos\!\big(\varphi_m(t)\big) \qquad (4)$$

mit

$m_0$ Amplitude des Mischsignals (wird im Folgenden nicht weiter betrachtet)
$\varphi_m(t)$ Phase des niederfrequenten Teils des Mischsignals

$$\varphi_m = \varphi_s(t - t_d) - \varphi_s(t) \qquad (5)$$

Durch Einsetzen von $\varphi_s$ aus Gleichung (3) in Gleichung (5) ergibt sich

$$\frac{\varphi_m(t)}{2\pi} = \frac{B}{T} t_d t - f_0 t_d - \frac{1}{T} \frac{B}{2} t_d^2 \qquad (6)$$

Bei zeitlich unveränderlicher Zielentfernung ist $t_d$ konstant. Nur der erste Term auf der rechten Seite von Gleichung (6) ist dann zeitabhängig. Die zeitliche Ableitung von $\varphi_m(t)/(2\pi)$, also die Frequenz des Mischsignals, ist dann

$$f_m = \frac{B}{T} t_d \qquad (7)$$

Diese Frequenz ist die Basis für die übliche Entfernungsmessung mit einem FMCW-Radar. Wie in diesem Zusammenhang deutlich wird, werden der zweite und dritte Term bei der Auswertung nicht berücksichtigt, sind daher für die Ermittlung von $\omega_m$ unbedeutend, da diese Terme bei der Ableitung nach der Zeit wegfallen.

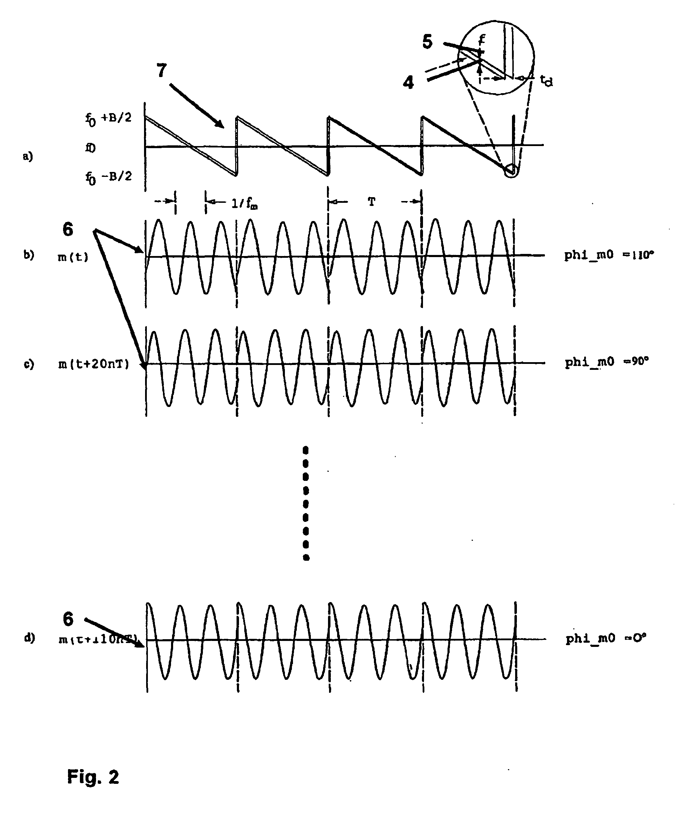

Figur 2a zeigt ein frequenzmoduliertes Sendesignal 4, das einen sägezahnartigen Verlauf aufweist. Ferner ist versetzt hierzu das von einem feststehenden Objekt reflektierte Echosignal 5 dargestellt. Durch die Frequenzmodulation des Sendesignals 4 bewegt sich der Frequenzlauf 7, der sogenannte Sweep, von $f_0 + \dfrac{B}{2}$ auf $f_0 - \dfrac{B}{2}$ **ab** und springt anschließend wieder zurück auf einen Wert von $f_0 + \dfrac{B}{2}$.

Hierbei repräsentiert $f_0$ den Wert für die Mittenfrequenz des Sendesignals 4, während B die Bandbreite, manchmal auch Frequenzhub genannt, des Sendesignals 4 repräsentiert. Deutlich zu erkennen ist, dass das Echosignal 5 dem Sendesignal 4 nachläuft (s. auch Ausschnittsvergrößerung der Figur 2a), so dass die augenblickliche Frequenz des Echosignals 5 stets höher als die Frequenz des Sendesignals 4 ist. Dieser Unterschied der Frequenzen wird als Frequenzdifferenz zwischen Sende- und Echosignal bezeichnet.

In den Figuren 2b bis 2d sind jeweils die Funktionen des an der Mischdiode entstehenden Ausgangssignals dargestellt, das im Übrigen als Mischsignal 6 bezeichnet wird. Dieses Signal entsteht durch Mischen des Sendesignals 4 mit dem durch wenigstens teilweise Reflexion des Sendesignals 4 an einem quasistationären Objekt gebildeten Echosignal 5, wobei es sich bei dem sogenannten Mischen um eine mathematische Multiplikation der Funktionen beider Signale handelt. Die Frequenz des Mischsignals 6 stellt gleichzeitig die Frequenzdifferenz zwischen dem Sende- 4 und dem Echosignal 5 dar. Somit handelt es sich bei dem Kehrwert der Periodendauer um die Frequenz des Mischsignals 6 und somit um die Frequenzdifferenz zwischen Sende- 4 und Echosignal 5. In den Figuren 2b bis 2d ist jeweils die Funktion des Mischsignals 6 Ober eine Dauer von vier Frequenzsweeps dargestellt. In den dargestellten Fällen ist das Mischsignal gemäß Figur 2c gegenüber dem gemäß Figur 2b um 20 nT verzögert, das Mischsignal gemäß Figur 2d ist gegenüber dem Signal gemäß Figur 2b um 110 nT verzögert. Bei den in Figur 2 dargestellten Beispielfällen wurde davon ausgegangen, dass eine Entfernungsänderung zum Zielobjekt nach n Frequenzsweeps zu einer Phasenänderung von 1° führt, wobei n wesentlich größer als 1 ist. Somit gilt in diesem Fall: $\dfrac{360}{2\pi} \dfrac{\partial \varphi_{m0}}{\partial t} = \dfrac{1°}{n \cdot T}$.

Gemäß der Erfindung wird vorgeschlagen, nach erfolgter Grob-Ortung des Ziels mit Hilfe von $f_m$, zusätzlich den zeitunabhängigen Teil der Phase des Mischsignals auszuwerten. Der zeitunabhängige Teil der Phase wird durch die zweiten und dritten Terme von Gleichung (6) beschrieben. Beide Terme enthalten den Faktor $t_d$, also eine Information über die Laufzeit des Sende- und Echosignals. Hierbei ist der dritte Term unter allen praktischen Bedingungen sehr klein gegen den zweiten, so dass der dritte Term für die weitere Auswertung vernachlässigt wird.

Der zweite Term

$$\frac{1}{2\pi} \varphi_{m0}(t_d) = -f_0 t_d \qquad (8)$$

ist dagegen von der Laufzeit abhängig. Setzt man für die Laufzeit Gleichung (4) ein, so wird deutlich, dass eine Änderung der Zielentfernung von einer halben Wellenlänge eine Phasenverschiebung um 360° bewirkt. Daher sind Zielentfernungsänderungen von einem kleinen Bruchteil der Wellenlänge durch Auswertung der Phase $\varphi_{m0}(t_d)$ vergleichsweise einfach und genau messbar. Unsicherheiten durch Fehler des Frequenzhubs $B$ oder der Länge eines Modulationsintervalls, also der Länge eines Signalsweeps, $T$ sind hierfür unbedeutend.

Im Gegensatz zur herkömmlichen Messung einer Entfernung mit einem FMCW-Radargerät und der damit verbundenen Frequenzanalyse ist die Erfassung einer Entfernungsänderung durch eine Phasenanalyse allerdings von der Mittenfrequenz $f_0$ des Sende- und oder Echosignals abhängig. Ein relativer Fehler der Mittenfrequenz führt zu einem ebenso großen Betrag des relativen Fehlers der Laufzeit bzw. Zielentfernung.

Das beschriebene Verfahren ist vor allem für Messungen von sehr kleinen Entfernungsänderungen, die in einem vergleichsweise großen Zeitraum stattfinden, also für quasi sehr langsame Entfernungsänderungen, geeignet. Bei diesen Messungen sollte vor allem sicher gestellt sein, dass die Änderung der Entfernung zwischen zwei aufeinanderfolgenden Messungen nicht den Eindeutigkeitsbereich der Phasenmessung überschreitet. Damit ist gleichzeitig sichergestellt, dass die Gleichung (6), die eine weitgehende Stationarität des Zielobjekts voraussetzt, noch eine hinreichend genaue Beschreibung des Mischsignals darstellt. Für eine beispielhaft gewählte Wellenlänge von 1,25 cm und einer Messzeit von 1 s bedeutet dies, dass die theoretisch maximale Entfernungsänderung pro Zeiteinheit (= Bewegungsgeschwindigkeit des Zielobjekts) 0,625 cm s$^{-1}$nicht überschreiten darf.

Die Untergrenze der erfassbaren Geschwindigkeit hängt im Wesentlichen von der Stabilität der durch Gleichung (8) beschriebenen Beziehung zwischen der Phase und Laufzeit ab. Die relative Drift des Laufzeitfehlers (Zielentfernungsfehlers) ist gleich der (negativen) relativen Drift des Mittenfrequenzfehlers.

Für eine Drift des Mittenfrequenzfehlers von 10$^{-7}$h$^{-1}$ und eine Zielentfernung von 1 km bedeutet dies zum Beispiel, dass der Fehler der Geschwindigkeitsmessung, und damit die erfassbare untere Grenze der Geschwindigkeit, bei 0,1 mm h$^{-1}$liegt.

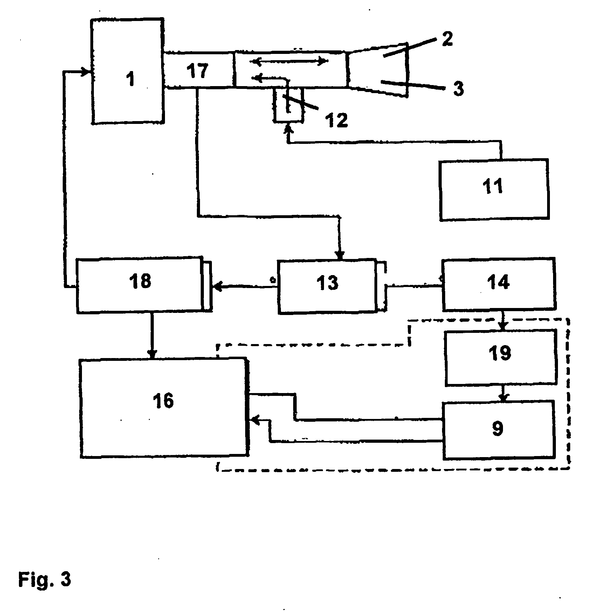

Figur 3 zeigt ein Schaltbild eines modifizierten FMCW-Radars, mit dem zur Bestimmung des nicht durch eine Entfernungsänderung des Zielobjekts verursachten Laufzeitfehler eine Frequenzdrift des Sendesignals 4, die durch Bauteilalterung und / oder Temperaturschwankungen bedingt sein kann, für die Bestimmung von Entfernungsänderungen zwischen dem Radargerät und einem Messobjekt verwendet wird. Zusätzlich zu den bereits im Zusammenhang mit Figur 1 erläuterten Anlagenkomponenten ist vor allem eine als Frequenzzähler ausgebildete Zähleinheit 9 vorgesehen, mit der die Perioden eines mit Hilfe eines Referenzsignals 10 erzeugten Zwischenfrequenzsignals 8 ermittelt werden.

Bei dem In Figur 3 dargestellten erfindungsgemäß ausgeführten FMCW-Radar ist zusätzlich zu der herkömmlichen Ausführung gemäß Figur 1 ein quarz-stabiler, temperaturkompensierter Oszillator 11 vorgesehen, der ein Referenzsignals 10 mit einer um 100 MHz gegenüber der nominellen Mittenfrequenz des Sendesignals 4 verschobenen Referenzfrequenz erzeugt. In diesem Fall beträgt die Mittenfrequenz des Sendesignals 24,15 GHz, während das Referenzsignal 10 eine Referenzsignalfrequenz von 24,05 GHz aufweist. Das Referenzsignal 10 wird über eine Hilfsantenne 12 in die Empfangseinheit 3 des Radargeräts eingespeist. Anschließend wird in dem Mischer 6 das Referenzsignal 10 mit dem Sendesignal 4 gemischt und das auf diese Weise entstehende Zwischensignal 8 über eine Frequenzweiche 13 auf einen Zwischensignalverstärker 14 und von diesem über einen Tiefpassfilter 15 schließlich nach einer AC/TTL-Umwandlung auf die Zähleinheit 9 geleitet.

Der Zähler 9 zählt die Perioden des Zwischensignals 8 innerhalb eines bestimmbaren Messintervalls.

Nach der erfolgten Messung stellt die als Frequenzzähler ausgeführte Zähleinheit 9 den Zählerstand für den Signal-Prozessor 16 des Radars zur Verfügung, so dass hier aus der Anzahl der Perioden sowie der Messintervalldauer die Zwischensignalfrequenz des Zwischensignals 8 berechnet wird. Schließlich wird die aktuelle Frequenzdrift, also der Unterschied zwischen der theoretisch vorgegebenen Mittenfrequenz, üblicherweise als nominelle Mittenfrequenz des Sendesignals 4 bezeichnet, und der tatsächlichen Ist-Mittenfrequenz des Sendesignals 4 ermittelt. In diesem Zusammenhang werden bei der Ermittlung der tatsächlichen Ist-Mittenfrequenz des Sendesignals 4 die Zwischensignalfrequenz und die Referenzsignalfrequenz unter Berücksichtigung des jeweiligen Vorzeichens addiert.

Der digitale Signal-Prozessor 16 des FMCW-Radars aktiviert die Zähleinheit 9 zu Beginn eines Modulationsintervalls und stoppt ihn nach einer ganzzahligen vielfachen Anzahl darauffolgender Modulationsintervalle. Der Zählerinhalt der Zähleinheit 9 repräsentiert die Frequenz mit 100 Hz absoluter Auflösung und bezogen auf die Sendefrequenz mit 0,4 x 10$^{-8}$ relativer Auflösung. Dieser Zählerinhalt wird vom digitalen Signal-Prozessor 16 ausgelesen und in den Standard-Datenstrom eingefügt.

Das erfindungsgemäße Verfahren bzw. das erfindungsgemäß ausgeführte FMCW-Radargerät beruht somit auf einer Hardware-Erweiterung eines Standard-FMCW-Radargeräts und sieht die Möglichkeit vor, die variabel driftende Frequenz des Sendesignals 4 zu ermitteln und den ermittelten Wert direkt bei der Bestimmung einer Entfernungsänderung zwischen Radargerät und Messobjekt zu verwenden.

Hierbei wird die aktuelle, driftende Frequenz des Sendesignals im Vergleich zu einer Referenzsignalfrequenz gemessen und diese variable Frequenz in der Ableitung der Entfernung aus der Phase des Radarechos berücksichtigt.

Bei der als Frequenzzähler ausgebildeten Zähleinheit 9 handelt es sich um einen CPLD-Baustein. Das verwendete Prinzip der Frequenzmessung beruht, wie zuvor beschrieben, auf der Zählung der Perioden des Zwischensignals 8 innerhalb einer bestimmten Zeit. Der für das erfindungsgemäß ausgeführte Verfahren verwendete Frequenzzähler 9 steht somit im Wesentlichen aus zwei Zählern. Bei dem ersten Zähler handelt es sich um ein synchronen Count-Down-Zähler, der mit der Systemuhr des CPLD-Chips von 20 MHz einen Initialisierungswert in seinen 28-Bit-langen Register dekrementiert. Hiermit lässt sich das Zeitintervall einer Frequenzmessung auf bis zu 13,4 Sec. einstellen. Während dieses Zeitintervalls inkrementiert der zweite Zähler, ein so genannter Period-Counter, seinen Registerinhalt (32-Bit) mit jeder steigenden Flanke am TTL-Eingang für die Frequenz des Zwischensignals 8. Wesentlich hierbei ist die Umwandlung des Zwischensignals 8 mit der Zwischenfrequenz in ein TTL-konformes Signal durch den AC/TTL-Konverter 19.

**Bezugszeichenliste**

| | |
|---|---|
| 1 | Gunn-Oszillator |
| 2 | Sendeeinheit |
| 3 | Empfangseinheit |
| 4 | Sendesignal |
| 5 | Echosignal |
| 6 | Mischsignal |
| 7 | Frequenzlauf (Sweep) |
| 8 | Zwischensignal |
| 9 | Zähleinheit |
| 10 | Referenzsignal |
| 11 | zusätzlicher Oszillator |
| 12 | Hilfsantenne |
| 13 | Frequenzweiche |
| 14 | Zwischensignalverstärker |
| 15 | Tiefpassfilter |
| 16 | Signal-Prozessor |
| 17 | Mischer |
| 18 | Auswerteelektronik |
| 19 | AC/TTL-Konverter |

**Patentansprüche**

1. Verfahren zur Messung einer Entfernungsänderung zwischen einem feststehenden Ausgangspunkt und einem weitgehend stationären Objekt mit einem FMCW-Radargerät, das frequenzmodulierte, kontinuierliche elektromagnetische Mikrowellen als Sendesignal (4) aussendet sowie als Echosignal (5) empfängt und auswertet, mit den Schritten

    - Senden eines Sendesignals (4) vom Ausgangspunkt derart in Richtung des Objekts, dass das Sendesignal (4) vom Objekt reflektiert wird,
    - Empfangen eines Echosignals (5), das durch die Reflexion des Sendesignal, am Objekt erzeugt wird,
    - Mischen des Sendesignals mit dem Echosignal im Mischer (17) zur Erzeugung eines Mischsignals (6),
    - Auswertung des Mischsignals (6), indem eine zeitliche Änderung der Phase des Mischsignals (6), also die Frequenz des Mischsignals, ermittelt wird, um unter Zugrundelegung der zeitlichen Änderung der Phase die Entfernung zwischen dem Ausgangspunkt und dem weitgehend stationären Objekt zu bestimmen, **gekennzeichnet durch**
    - Ermittlung einer für das FMCW-Radar gerätespezifischen, frequenzmodulationsüberlagerten Frequenzdrift des Sende- (4) und des Echosignals (5) sowie eines hieraus resultierenden, rechnerischen Laufzeitfehlers, wobei zur Ermittlung der gerätespezifischen Frequenzdrift eine Zwischenfrequenz (8) **durch** Mischen einer Referenzsignalfrequenz (10) mit einer nominalen Mittenfrequenz des Sende- (4) und des Echosignals (5) des Radars und anschließender Tiefpassfilterung gebildet wird,
    wobei ein zeitunabhängiger Teil der Phase des Mischsignals (6) unter Berücksichtigung einer Laufzeit des Sende- und des Echosignals zwischen Ausgangspunkt und Objekt ausgewertet wird und unter Zugrundelegung einer Änderung des zeitunabhängigen Teils der Phase die Änderung der Entfernung zwischen dem Ausgangspunkt und dem Objekt bestimmt wird, und
    dass der **durch** die Frequenzdrift verursachte rechnerische Laufzeitfehler bei der Auswertung des zeitunabhängigen Teils der Phase des Mischsignals (6) berücksichtigt wird.

2. Verfahren nach Anspruch 1,
**dadurch gekennzeichnet, dass** ein hochfrequenter Anteil des Mischsignals (6) vor der Auswertung mit einem Tiefpassfilter (15) aus dem Mischsignal (6) herausgefiltert wird.

3. Verfahren nach Anspruch 1 oder 2,
**dadurch gekennzeichnet, dass** die Referenzsignalfrequenz (10) gegenüber der nominalen Mittenfrequenz um 90 bis 110 MHz verschoben ist.

4. Verfahren nach einem der Ansprüche 1 bis 3,
**dadurch gekennzeichnet, dass** mittels einer Zähleinheit (9) die innerhalb eines Messintervalls befindlichen Perioden der Zwischenfrequenz (8) ermittelt werden, um unter Zugrundelegung einer Größe des Messintervalls und einer Anzahl der Perioden die Zwischenfrequenz (8) zu bestimmen.

5. Verfahren nach einem der Ansprüche 1 bis 4,
**dadurch gekennzeichnet, dass** unter Zugrundelegung der Zwischenfrequenz (8) und der Referenzsignalfrequenz (10) eine Istfrequenz des Sende-(4) und des Echosignals (5) bestimmt wird und anhand eines Vergleichs der nominalen Mittenfrequenz und der Istfrequenz die gerätespezifische Frequenzdrift bestimmt wird.

6. Verfahren nach Anspruch 4 oder 5,
**dadurch gekennzeichnet, dass** die Zähleinheit (9) lediglich zeitweise innerhalb der Messung aktiviert wird.

7. Verfahren nach einem der Ansprüche 4 bis 6,
**dadurch gekennzeichnet, dass** die Zähleinheit (9) zu Beginn eines Modulationsintervalls eines Frequenzsweeps des Sendesignals (4) aktiviert wird.

8. Radargerät, das frequenzmodulierte, kontinuierliche elektromagnetische Mikrowellen als Sendesignal (4) aussendet sowie durch Reflexion an einem weitgehend stationären Objekt als Echosignal (5) empfängt, zur Messung einer Entfernung und/oder einer Entfernungsänderung zwischen einem feststehenden Ausgangspunkt und dem Objekt mit einer Sende- (2) und einer Empfangseinheit (3) zum Senden und Empfangen der Sende (4)- sowie Empfangssignale (5), mit einem Mischer (17) zur Mischung des Sende- (4) und Empfangssignals (5) und einer Auswerteelektronik (18), in der unter Zugrundelegung einer zeitlichen Phasenänderung des Mischsignals (6) eine Entfernung zwischen dem Ausgangspunkt und dem Objekt bestimmbar ist,
wobei ein Oszillator zur Erzeugung eines Referenzsignals (10) zumindest weitgehend konstanter Frequenz vorgesehen ist, das über eine Hilfsantenne (12) in die Empfangseinheit (3) einspeisbar ist, und der Empfangseinheit (3) eine Frequenzweiche (13) nachgeschaltet ist, über die ein durch Mischen von Sende- (4) und Referenzsignal (10) gebildetes, eine Zwischenfrequenz aufweisendes Zwischenfrequenzsignal (8) auf eine Zähleinheit (9) zur Ermittlung der Perioden innerhalb eines Messintervalls geleitet wird, und die Zähleinheit (9) derart mit einem Digitalsignalprozessor (16) verbunden ist, dass auf der Grundlage der ermittelten Perioden die Größe der Zwischenfrequenz ermittelt wird und anhand eines Vergleichs einer Istfrequenz mit einer nominalen Mittenfrequenz eine gerätespezifische Frequenzdrift des Dopplerradar bestimmbar ist,
**dadurch gekennzeichnet, dass** durch die Auswerteelektronik (18) ein zeitunabhängiger Teil der Phase des Mischsignals (6) unter Berücksichtigung einer Laufzeit des Sende- (4) und des Echosignals (5) zwischen Sendeeinheit (2) und dem Objekt derart auswertbar ist, dass aus einer Änderung der Laufzeit und aus der Frequenzdrift eine Änderung der Entfernung zwischen der Sendeeinheit (2) und dem Objekt erfassbar ist.

9. Radargerät nach Anspruch 8,
**dadurch gekennzeichnet, dass** Sende- und Empfangseinheit in eine Radarantenne integriert sind.

10. Radar nach Anspruch 8 oder 9,
**dadurch gekennzeichnet, dass** der Oszillator quarz-stabil und temperaturkompensiert ist.

11. Verwendung eines Radargeräts nach einem der Ansprüche 8 bis 10 zur Bestimmung einer Bewegung einer Gesteinsformation, insbesondere einer Gebirgssteinformation.

**Claims**

1. A method for measuring a change in distance between a stationary initial point and a largely stationary object with a FMCW radar apparatus, which emits frequency-modulated, continuous electromagnetic microwaves as an emitting signal (4) as well as receives and evaluates them as an echo signal (5), comprising the steps of

   - sending an emitting signal (4) from said initial point in the direction of said object such that said emitting signal (4) is reflected by said object,
   - receiving an echo signal (5), which is generated by reflection of said emitting signal at said object,
   - mixing of said emitting signal with said echo signal in a mixer (17) for generating a mixed signal (6),
   - evaluating said mixed signal (6) by determining a temporal change in the mixed signal (6) phase, i.e. the frequency of said mixed signal, in order to determine the distance between said initial point and said largely stationary object based on said temporal change in the phase, **characterized by**
   - determining a frequency modulation-superimposed frequency drift of said emitting (4) and said echo signal (5), device-specific for said FMCW radar, as well as a calculative propagation time error resulting therefrom, wherein for determining said device-specific frequency drift an intermediate frequency (8) is formed by mixing a reference signal frequency (10) with a nominal center frequency of said emitting (4) and said echo signal (5) of said radar and subsequent low-pass filtering, wherein a time-independent part of said mixed signal (6) phase is evaluated considering a propagation time of said emitting and said echo signal between initial point and object and the change in the distance between said initial point and said object is determined based on a change in said time-independent part of said phase, and
   said calculative propagation time error caused by said frequency drift is considered in the evaluation of said time-independent part of said mixed signal (6) phase.

2. The method according to claim 1,
   **characterized in that** a high-frequency portion of said mixed signal (6) is filtered out of said mixed signal (6) prior to evaluation using a low-pass filter (15).

3. The method according to claims 1 or 2,
   **characterized in that** said reference signal frequency (10), compared to said nominal center frequency, is shifted by 90 to 110 MHz.

4. The method according to any of claims 1 to 3,
   **characterized in that**, using a counting unit (9), the periods of said intermediate frequency (8) within one measuring interval are determined, in order to determine said intermediate frequency (8) based on a quantity of said measuring interval and a number of said periods.

5. The method according to any of claims 1 to 4,
   **characterized in that**, based on said intermediate frequency (8) and said reference signal frequency (10), an actual frequency of said emitting (4) and said echo signal (5) is determined, and based on a comparison of said nominal center frequency and said actual frequency, the device-specific frequency drift is determined.

6. The method according to claims 4 or 5,
   **characterized in that** said counting unit (9) is activated during the measurement at times only.

7. The method according to any of claims 4 to 6,
   **characterized in that** said counting unit (9) is activated at the beginning of a modulation interval of a frequency sweep of said emitting signal (4).

8. A radar apparatus emitting frequency-modulated, continuous electromagnetic microwaves as an emitting signal (4) as well as receiving these due to reflection at a largely stationary object as an echo signal (5), for measuring a distance and/or a change in distance between a stationary initial point and said object with an emitting (2) and a receiving unit (3) for sending and receiving said emitting (4) as well as receiving signals (5), with a mixer (17) for mixing said emitting (4) and receiving signal (5), and evaluation electronics (18), in which, based on a temporal phase change in said mixed signal (6), a distance between said initial point and said object can be determined, wherein an oscillator for generating a reference signal (10) with an at least largely constant frequency is provided, which can be fed into said receiving unit (3) via an auxiliary antenna (12), and wherein a crossover (13) is installed downstream of said receiving unit (3), via which an intermediate frequency signal (8) formed by mixing said emitting (4) and said reference signal (10) and having an intermediate frequency is guided to a counting unit (9) for determining the periods within one measuring interval, and wherein said counting unit (9) is connected with a digital signal processor (16) such that, based on the periods determined, the quantity of said intermediate frequency is determined and, based on a comparison of an actual frequency with a nominal center frequency, a device-specific frequency drift of the Doppler radar can be determined,

**characterized in that**, using said evaluation electronics (18), a time-independent part of said mixed signal (6) phase, considering a propagation time of said emitting (4) and said echo signal (5) between said emitting unit (2) and said object, can be evaluated such that from a change in said propagation time and from said frequency drift, a change in said distance between said emitting unit (2) and said object can be detected.

9. The radar apparatus according to claim 8,
**characterized in that** emitting and receiving unit are integrated into one radar antenna.

10. The radar according to claims 8 or 9,
**characterized in that** said oscillator is quartz-stable and temperature-compensated.

11. Use of a radar apparatus according to any of claims 8 to 10 for determining a movement of a rock formation, in particular a mountain rock formation.

## Revendications

1. Méthode de mesure de la modification de la distance entre un point de départ fixe et un objet largement stationnaire au moyen d'un appareil radar FMCW lequel émet des micro-ondes électromagnétiques continues et à fréquence modulée comme signal émis (4) et qui les reçoit comme signal réfléchi (5) et les exploite, suivant les étapes suivantes

   - émission d'un signal émis (4) du point de départ en direction dudit objet de manière à ce que ledit signal émis (4) soit réfléchi dudit objet,
   - réception d'un signal réfléchi (5) qui est créé par la réflexion du signal émis sur ledit objet,
   - mixage dudit signal émis avec ledit signal réfléchi dans le mélangeur (17) afin de créer un signal mixte (6),
   - exploitation dudit signal mixte (6) en déterminant une modification temporelle de la phase dudit signal mixte (6), soit la fréquence dudit signal mixte afin de déterminer la distance entre ledit point de départ et ledit objet largement stationnaire sur la base de ladite modification temporelle de la phase,
   caractérisée en ceci que
   - une dérive de fréquence spécifique à l'appareil radar FMCW et superposée par une modulation de fréquence dudit signal émis (4) et dudit signal réfléchi (5) ainsi qu'une erreur par le temps de transit calculée et qui en résulte sont déterminées, une fréquence intermédiaire (8) étant créée en mélangeant une fréquence de signal de référence (10) avec une fréquence médium nominale dudit signal émis (4) et dudit signal réfléchi (5) du radar et en effectuant, ensuite, un filtrage passe-bas, afin de déterminer ladite dérive de fréquence spécifique à l'appareil radar,
   une partie indépendante du temps de la phase dudit signal mixte (6) étant exploitée en tenant compte d'un temps de transit desdits signaux émis et réfléchi entre ledit point de départ et ledit objet et la modification de la distance entre ledit point de départ et ledit objet étant déterminée sur la base d'une modification de ladite partie indépendante du temps de la phase et
   caractérisée en ceci que ladite erreur par le temps de transit calculée et causée par la dérive de fréquence est prise en compte pour l'exploitation de la partie indépendante du temps de la phase dudit signal mixte (6).

2. Méthode selon la revendication 1,
caractérisée en ceci que, avant l'exploitation, une partie à haute fréquence dudit signal mixte (6) est filtrée dudit signal mixte (6) au moyen d'un filtre passe-bas (15).

3. Méthode selon la revendication 1 ou 2,
caractérisée en ceci que ladite fréquence de signal de référence (10) est déplacée de 90 à 110 MHz par rapport à ladite fréquence médium nominale.

4. Méthode selon l'une des revendications 1 à 3,
caractérisée en ceci qu'au moyen d'une unité de comptage (9), les périodes de ladite fréquence intermédiaire (8) qui se trouvent à l'intérieur d'un intervalle de mesure, sont déterminées afin de déterminer ladite fréquence intermédiaire (8) sur la base d'une grandeur dudit intervalle de mesure et d'un nombre desdites périodes.

5. Méthode selon l'une des revendications 1 à 4,
   caractérisée en ceci que, sur la base d'une fréquence intermédiaire (8) et d'une fréquence de signal de référence (10), une fréquence réelle dudit signal émis (4) et dudit signal réfléchi (5) est déterminée et que, sur la base d'une comparaison de ladite fréquence médium nominale et de ladite fréquence réelle, la dérive de fréquence spécifique à l'appareil est déterminée.

6. Méthode selon la revendication 4 ou 5,
   caractérisée en ceci que ladite unité de comptage (9) n'est activée que temporairement durant la mesure.

7. Méthode selon l'une des revendications 4 à 6,
   caractérisée en ceci que ladite unité de comptage (9) est activée au début d'un intervalle de modulation d'un balayage en fréquence dudit signal émis (4).

8. Appareil radar qui émet des micro-ondes électromagnétiques continues et à fréquence modulée comme signal émis (4) et qui les reçoit comme signal réfléchi (5) en raison de leur réflexion sur un objet largement stationnaire, appareil qui est destiné à mesurer la distance et/ou la modification de la distance entre un point de départ fixe et un objet au moyen d'une unité d'émission (2) et d'une unité de réception (3) afin d'émettre et de recevoir lesdits signaux émis (4) et reçu (5), avec un mélangeur (17) destiné au mixage desdits signaux émis (4) et reçu (5) et une électronique d'exploitation (18) qui permet de déterminer une distance entre le point de départ et l'objet sur la base d'une modification temporelle de la phase dudit signal mixte (6),
   un oscillateur étant prévu pour créer un signal de référence (10) d'une fréquence du moins largement constante et qui peut être alimenté à travers d'une antenne auxiliaire (12) dans l'unité de réception (3), et un filtre de fréquence (13) étant placé en aval de ladite unité de réception (3) et par lequel est transporté un signal de fréquence intermédiaire (8) créé en mélangeant ledit signal émis (4) et ledit signal de référence (10) et qui présente une fréquence intermédiaire, vers une unité de comptage (9) destinée à déterminer les périodes dans les limites d'un intervalle de mesure et ladite unité de comptage (9) étant reliée à un processeur de signal numérique (16) de manière à ce que sur la base des périodes déterminées, la grandeur de ladite fréquence intermédiaire soit déterminée et qu'en comparant une fréquence réelle avec une fréquence médium nominale, une dérive de fréquence spécifique à l'appareil radar double puisse être déterminée,
   caractérisé en ceci que ladite électronique d'exploitation (18) permet d'exploiter une partie indépendante du temps de la phase dudit signal mixte (6) en tenant compte d'un temps de transit dudit signal émis (4) et dudit signal réfléchi (5) entre ladite unité d'émission (2) et ledit objet de manière à ce que la modification du temps de transit et la dérive de fréquence permettent de conclure à une modification de la distance entre ladite unité d'émission (2) et ledit objet.

9. Appareil radar selon la revendication 8,
   caractérisé en ceci que lesdites unités d'émission et de réception sont intégrées à une antenne radar.

10. Radar selon la revendication 8 ou 9,
    caractérisé en ceci que ledit oscillateur est commandé par quartz et est compensé en température.

11. Utilisation d'un appareil radar selon l'une des revendications 8 à 10 afin de déterminer un mouvement d'une formation de roches, notamment d'une formation de roches de montage.

**Fig. 1**

**Fig. 2**

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0499952 A1
- US 4106020 A
- US 2008291078 A1
- GB 1108115 A
- DE 19632889 A1